# EUROPEAN PATENT APPLICATION

(11) **EP 1 432 109 A1**
(43) Date of publication of application: **23.06.2004**
(21) Application number: 02800247.5
(22) Date of filing: 26.09.2002
(51) Int. Cl.: H02M 7/12

(54) **POWER SOURCE APPARATUS**

(30) Priority: 28.09.2001 JP 2001300591
(71) Applicant: Matsushita Electric Industrial Co., Ltd., Kadoma-shi, Osaka 571-8501 (JP)
(72) Inventor: HARADA, Kazuhiro, Itami-shi, Hyogo 664-0881 (JP); NINOMIYA, Yasuhisa, Kusatsu-shi, Shiga 525-0054 (JP); MAEDA, Shiro, Otsu-shi, Shiga 520-2101 (JP); SUGIMOTO, Tomohiro, Kusatsu-shi, Shiga 525-0057 (JP); BABA, Toshinari, Otsu-shi, Shiga 520-2101 (JP); GOTO, Eiji, Otsu-shi, Shiga 520-0867 (JP)
(74) Representative: Grünecker, Kinkeldey, Stockmair & Schwanhäusser Anwaltssozietät
(86) International application number: PCT/JP2002/009927
(87) International publication number: WO 2003/030346

(57) **Abstract**

A power supply device includes an ac power supply (1), a bridge rectifying circuit (6) formed of four diodes (2 - 5) for fullwave-rectifying an ac supplied from the ac power supply (1), reactor (8) coupled between the ac power supply (1) and an ac input terminal (6a), a capacitor (10) coupled via bilateral switch (9) between an ac input terminal (6b) and a dc output terminal (6d) of the bridge rectifying circuit (6), a smoothing capacitor (7), zero-cross detecting means (12), bilateral-switch driving signal generating means (13) and bilateral-switch driving means (14).

## Description

### Technical Field

The present invention relates to a power supply device which powers an apparatus, a system or the like. More particularly it relates to a power supply device adopting a rectifying method using a bridge rectifying circuit.

### Background Art

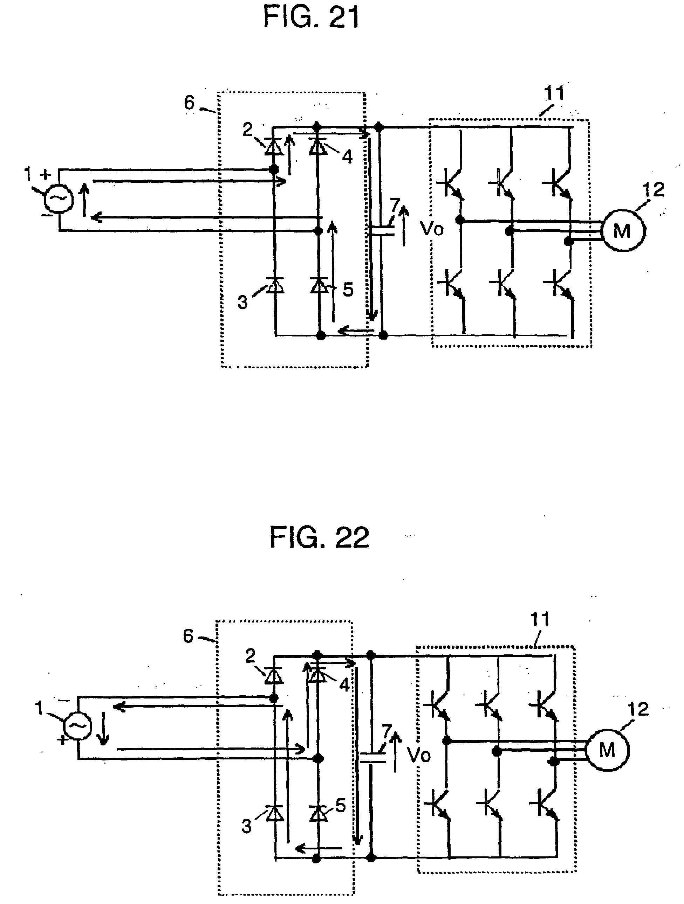

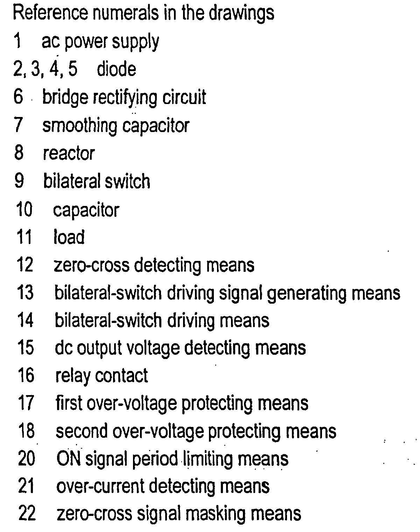

Various rectifying methods using diodes are known in the market. Figs. 21 and 22 show a full-wave rectifying circuit including bridge rectifying circuit 6 formed of four diodes 2, 3, 4 and 5. Bridge rectifying circuit 6 is coupled to load 11 via smoothing capacitor 7.

Fig. 21 illustrates a current flow from ac power supply 1 during a positive half cycle. The current passes, as shown with arrow marks, through diode 2, smoothing capacitor 7 and diode 5 in this order, and produces positive voltage Vo across capacitor 7.

Fig. 22 illustrates a current flow from ac power supply 1 during a negative half cycle. The current passes, as shown with arrow marks, through diode 4, smoothing capacitor 7 and diode 3 in this order, and produces positive voltage Vo across capacitor 7.

In other words, an ac input supplied from ac power supply 1 is fullwave-rectified and produces a positive dc voltage. However, the foregoing power supply device feeds an input current only when a voltage of power supply 1 is higher than the dc output voltage, so that the power supply device encounters a low input power factor and great harmonics.

To overcome the problems discussed above, a reactor is coupled, in general, between ac power supply 1 and bridge rectifying circuit 6; however, this structure can indeed suppress the harmonics, but the input power factor still stays as low as approx. 70%. Therefore, a middle- or large-capacity of power supply needs larger sizes of elements, and this will cause the power supply device to be a larger body, and burden the power supply system with a greater load.

### Disclosure of the Invention

A power supply device includes the elements below:
an ac power supply;
a bridge rectifying circuit for fullwave-rectifying an ac supplied from the ac power supply; and
a smoothing capacitor to be coupled with dc output terminals of the bridge rectifying circuit.

To be more specific, the present invention provides the power supply device comprising the following elements:
a reactor coupled between the ac power supply and an ac input terminal of the bridge rectifying circuit;
a capacitor coupled via a bilateral switch between another ac input terminal and a dc output terminal of the bridge rectifying circuit;
zero-cross detecting means for detecting a zero point of a voltage of the ac power supply;
bilateral-switch driving signal generating means for generating a driving signal of the bilateral switch based on an output from the zero-cross detecting means;
bilateral-switch driving means for driving the bilateral switch based on a signal generated by bilateral-switch driving signal generating means;
dc output voltage detecting means for detecting a dc output voltage applied across the smoothing capacitor; and
first over-voltage protecting means for turning off the bilateral switch until the dc output voltage becomes lower than an over-voltage protection releasing level that is set at lower than over-voltage protecting level OV1 when the dc output voltage exceeds the OV1.

### Brief Description of the Drawings

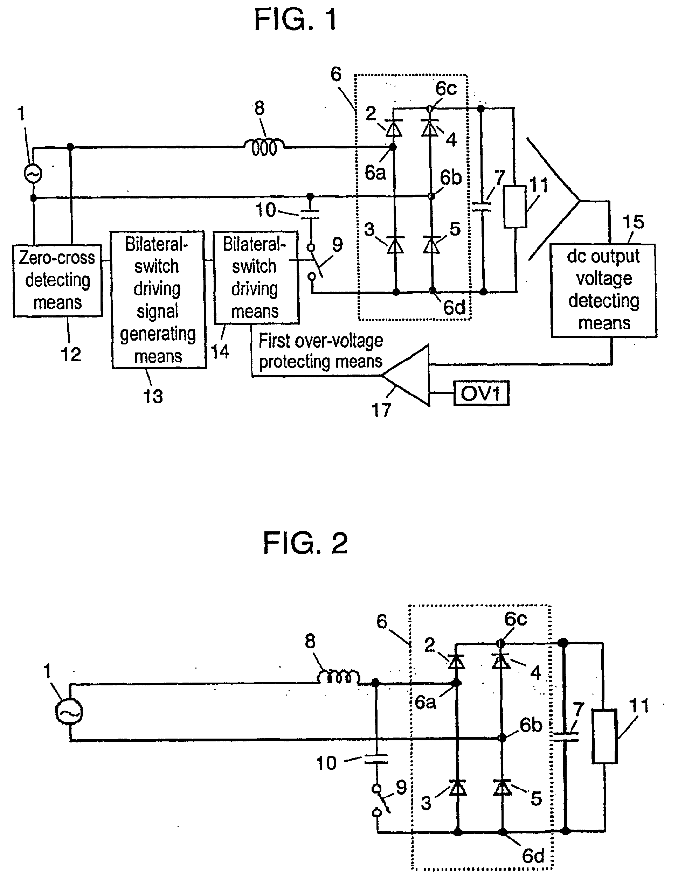

Fig. 1 shows a structure of a power supply device in accordance with a first exemplary embodiment of the present invention.
Fig. 2 shows a structure of a power supply device in accordance with the first exemplary embodiment of the present invention.

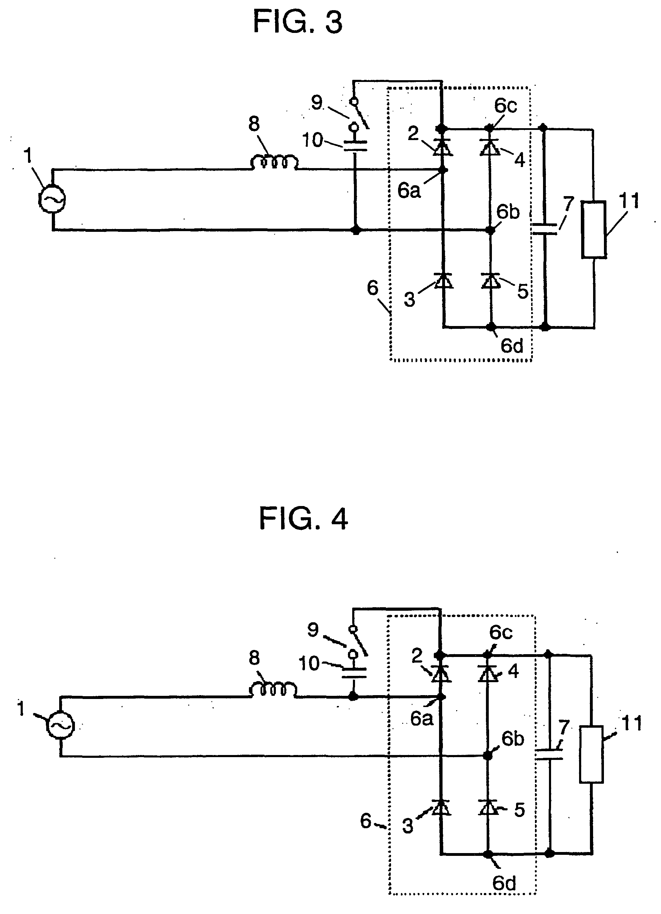

Fig. 3 shows a structure of a power supply device in accordance with the first exemplary embodiment of the present invention.
Fig. 4 shows a structure of a power supply device in accordance with the first exemplary embodiment of the present invention.

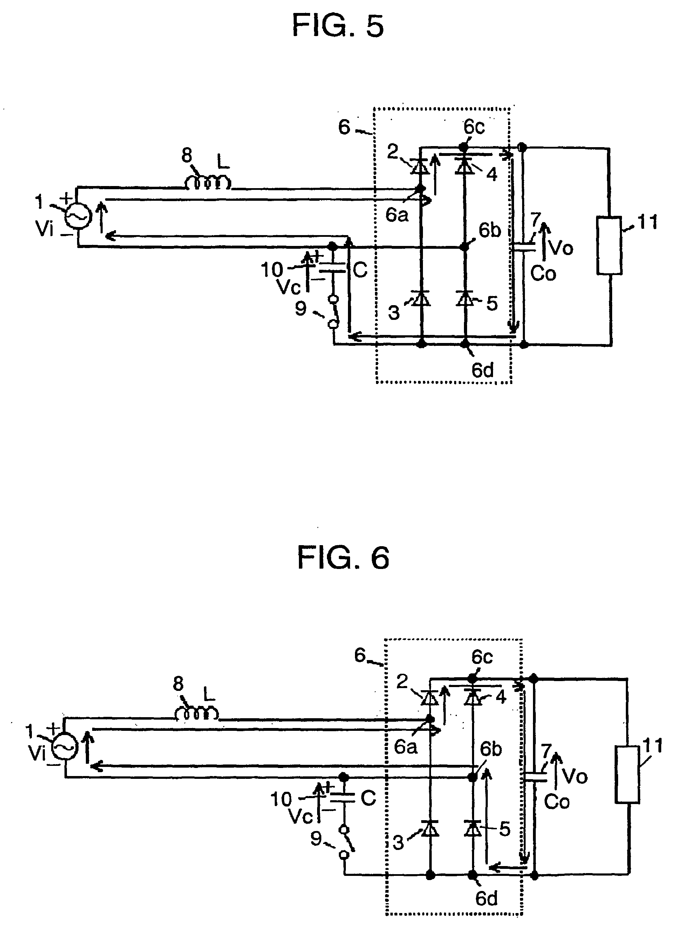

Fig. 5 illustrates an operation of the power supply device in accordance with the first exemplary embodiment of the present invention.
Fig. 6 illustrates an operation of the power supply device in accordance with the first exemplary embodiment of the present invention.

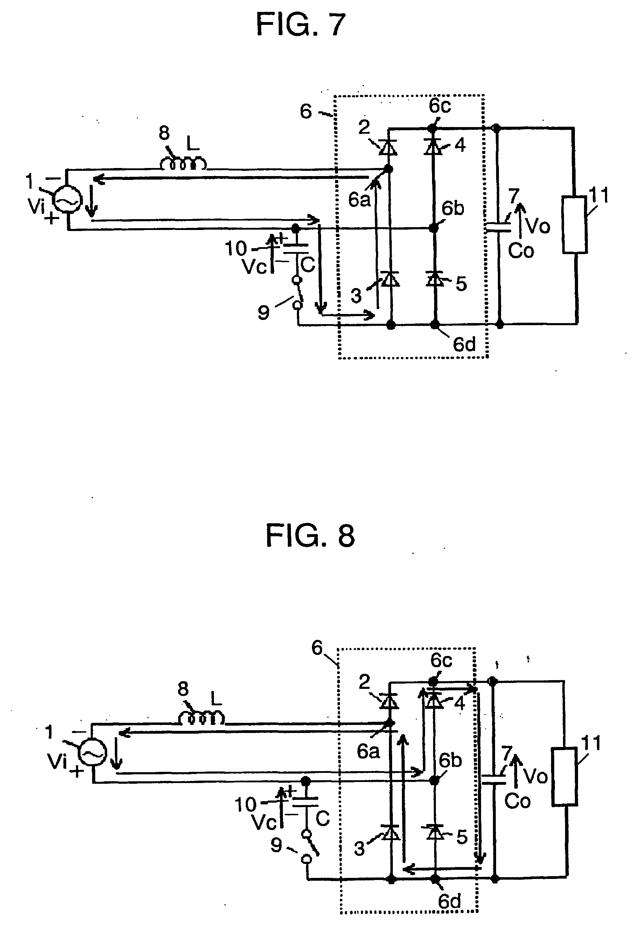

Fig. 7 illustrates an operation of the power supply device in accordance with the first exemplary embodiment of the present invention.
Fig. 8 illustrates an operation of the power supply device in accordance with the first exemplary embodiment of the present invention.

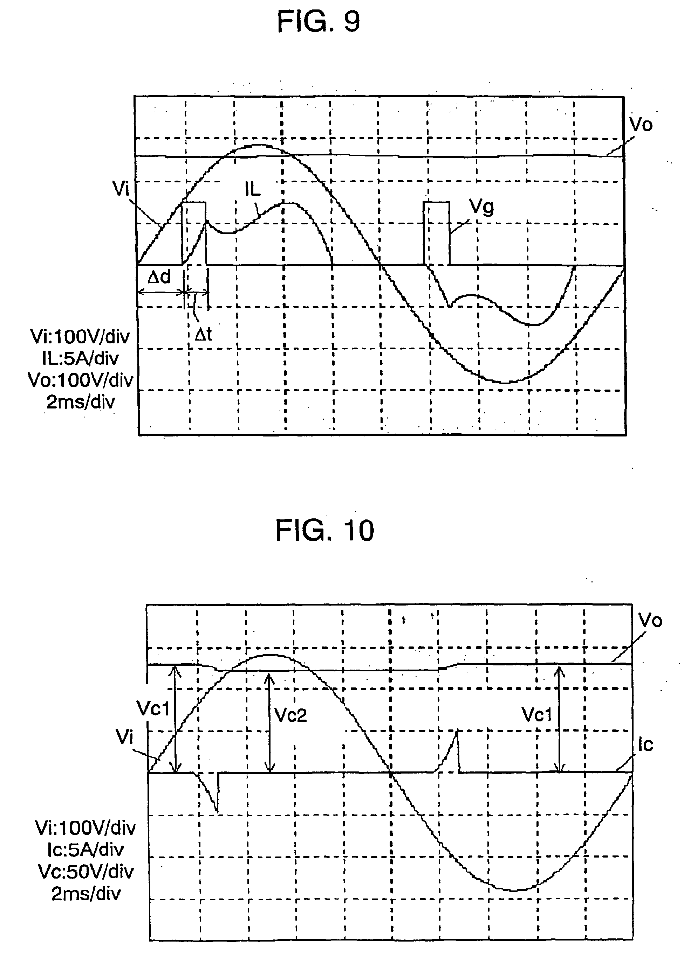

Fig. 9 shows a waveform of the power supply device in accordance with the first exemplary embodiment of the present invention.
Fig. 10 shows a waveform of the power supply device in accordance with the first exemplary embodiment of the present invention.

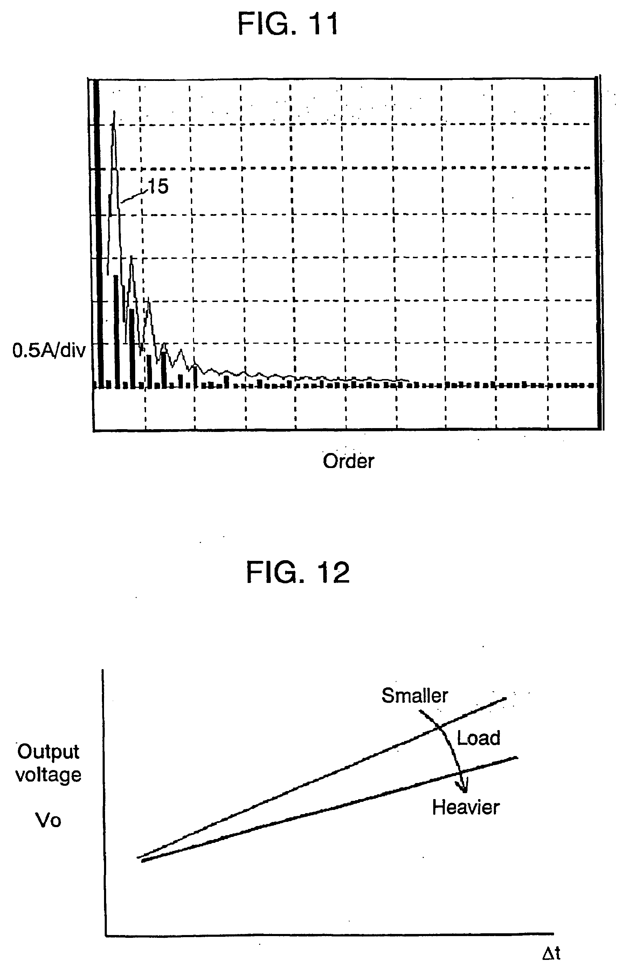

Fig. 11 shows a comparison between a regulatory guideline and the power supply device in accordance with the first exemplary embodiment of the present invention.
Fig. 12 shows a relation between output voltage Vo and Δt, a load of the power supply device in accordance with the first exemplary embodiment of the present invention.

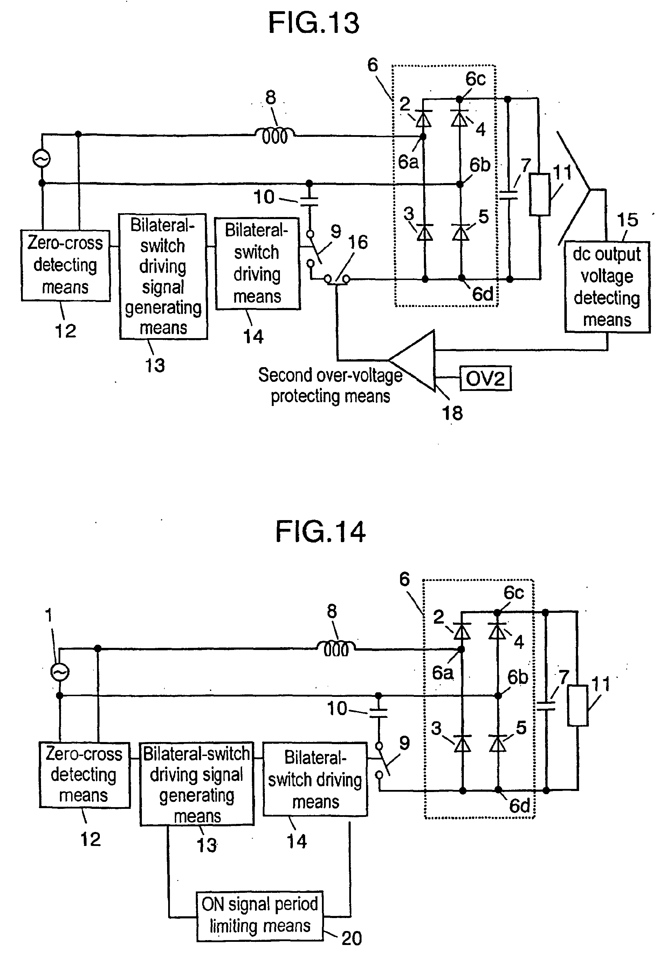

Fig. 13 shows a structure of a power supply device in accordance with a second exemplary embodiment of the present invention.
Fig. 14 shows a structure of a power supply device in accordance with a third exemplary embodiment of the present invention.

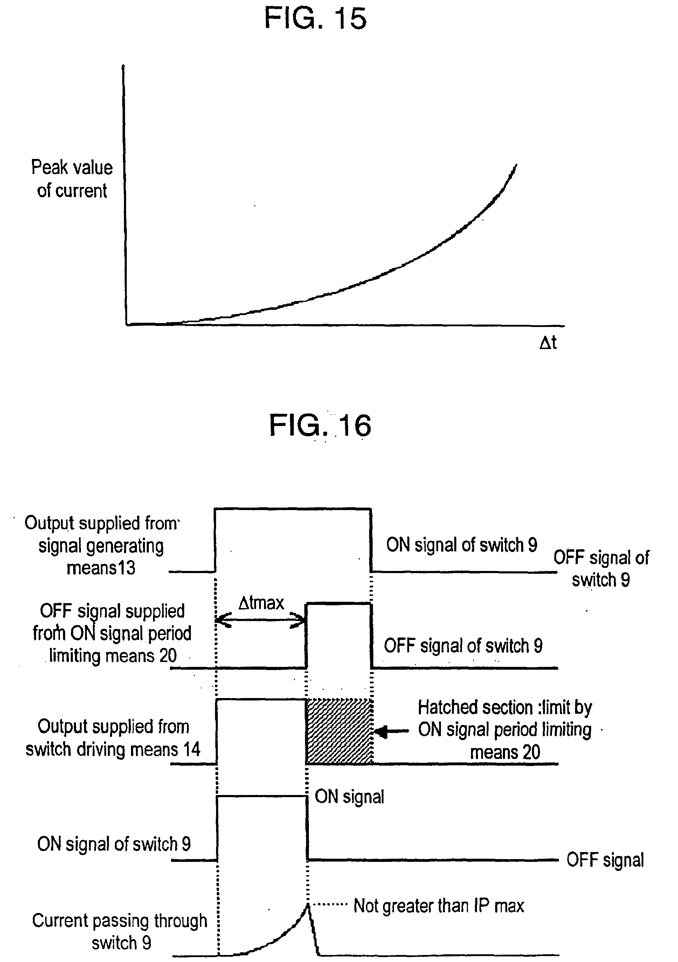

Fig. 15 illustrates a peak current of the power supply device in accordance with the third exemplary embodiment of the present invention.
Fig. 16 illustrates a timing chart of driving a bilateral switch of the power supply device in accordance with the third exemplary embodiment of the present invention.

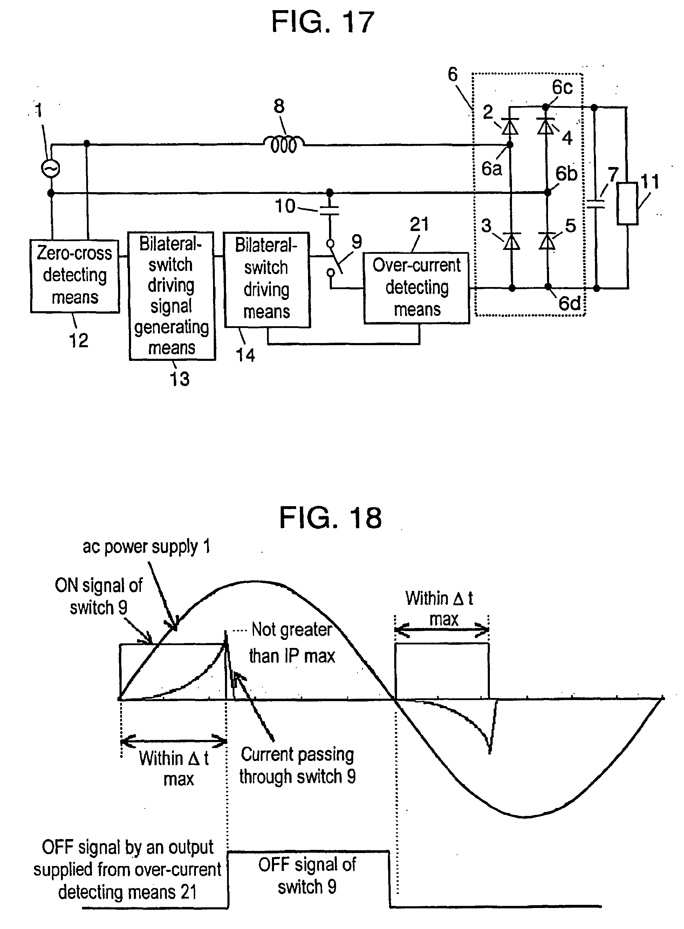

Fig. 17 shows a structure of a power supply device in accordance with a fourth exemplary embodiment of the present invention.
Fig. 18 illustrates timing charts of a driving signal and a current passing through a bilateral switch of the power supply device in accordance with the fourth exemplary embodiment of the present invention.

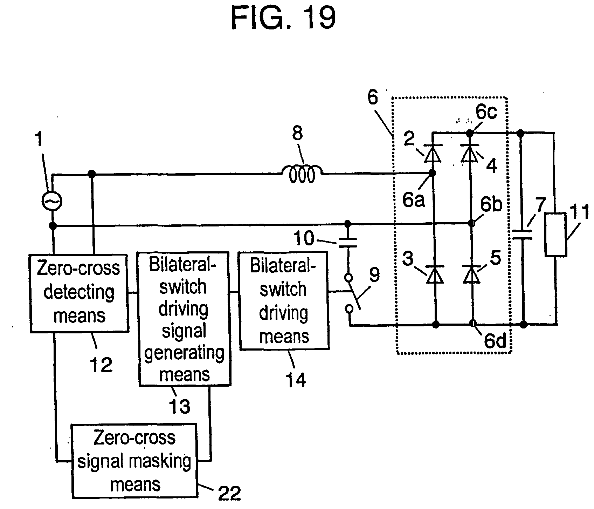

Fig. 19 shows a structure of a power supply device in accordance with a fifth exemplary embodiment of the present invention.

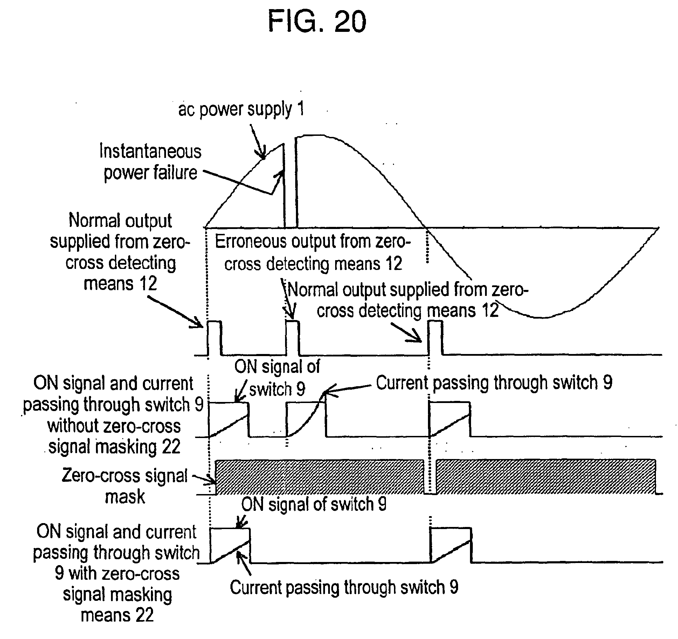

Fig. 20 shows a timing chart of the power supply device in accordance with the fifth exemplary embodiment of the present invention.
Fig. 21 shows a structure of a conventional power supply device.
Fig. 22 shows a structure of a conventional power supply device.

### Preferred Embodiments of the Invention

Exemplary embodiments of the present invention are demonstrated hereinafter with reference to the accompanying drawings. Similar elements to those in the conventional power supply device discussed previously have the same reference marks as those of the conventional one.

### Exemplary Embodiment 1

Fig. 1 through Fig. 4 illustrates power supply devices in accordance with the first exemplary embodiment. Respective power supply devices include bridge rectifying circuit 6 formed of four diodes 2 - 5, and ac power supply 1. Reactor 8 is coupled between ac power supply 1 and an ac input terminal of bridge rectifying circuit 6. Capacitor 10 is coupled between another ac input terminal and a dc output terminal of ac power supply 1.

Block diagrams shown in Figs. 1 and 2 tell that capacitor 10 is coupled via bilateral switch 9 between bridge circuit 6 at its ac input terminal 6a or 6b and negative dc output terminal 6c.

Block diagrams shown in Figs. 3 and 4 tell that capacitor 10 is coupled between bridge circuit 6 at its ac input terminal 6a or 6b and positive dc output terminal 6d.

Smoothing capacitor 7 is coupled between positive dc output terminal 6c and negative dc output terminal 6d of bridge rectifying circuit 6. This smoothing capacitor 7 allows a dc, which is produced by rectifying circuit 6 and yet has great changes, to change into a smooth dc.

The power supply device in accordance with the first exemplary embodiment further includes the following elements:
zero-cross detecting means 12 for detecting a zero point of a voltage of ac power supply 1;
bilateral-switch driving signal generating means 13 for generating a driving signal of bilateral switch 9 based on an output from zero-cross detecting means 12;
bilateral-switch driving means 14 for driving bilateral switch 9 based on an output supplied from bilateral-switch driving signal generating means 13;
dc output voltage detecting means 15 for detecting a dc output voltage applied across smoothing capacitor 7; and
first over-voltage protecting means 17 for turning off bilateral switch 9 until the dc output voltage becomes lower than a over-voltage protection releasing level that is set at lower level than over-voltage protecting level OV1 when the dc output voltage exceeds the OV1.

Fig. 2 - Fig. 4 omit zero-cross detecting means 14, bilateral switch driving signal generating means 13, bilateral switch driving means 14, dc output voltage detecting means 15 and first over-voltage protecting means 17.

An operation of the power supply device shown in Fig. 1 is demonstrated hereinafter with reference to Fig. 5 through Fig. 8. Figs. 5, 6 show a positive half cycle of ac input voltage Vi, and Figs. 7, 8 show a negative half cycle.

Figs. 9, 10 show waveforms of the following elements respectively when Vi = 200V, L = 10 mH, C = 300 µF, and Co = 1800 µF.

Fig. 9 shows the waveforms of ac input voltage Vi, an ac input current IL passing through reactor 8, dc output voltage Vo and driving signal Vg of bilateral switch 9. Fig. 10 shows the waveforms of ac input voltage Vi, a current passing through capacitor 10 and voltage Vc across capacitor 10.

In the foregoing structure, bilateral switch 9 is turned off just after a zero-cross of a positive half cycle of ac input voltage Vi, and dc output voltage Vo is higher than input voltage Vi. Thus diodes 2 and 5 are reverse-biased, which blocks the input current.

At this time, capacitor 10 has been charged during the previous cycle, so that it has voltage Vc1 at the polarity shown in the drawing. In a period of time Δd from the zero-cross of ac input voltage Vi (negative → positive), bilateral switch driving signal generating means 13 generates an ON signal of bilateral switch 9, and switch 9 is turned on by bilateral switch driving means 14. Then a current flows as arrow marks shown in Fig. 5.

In other words, the current flows from ac power supply 1 and passes through reactor 8, diode 2,smoothing capacitor 7, capacitor 10 in this order. Capacitor 7 discharges and its voltage becomes lower than Vc1.

Time Δd is to be selected such that when switch 9 is turned on, the sum of ac input voltage Vi and voltage Vc1 of capacitor 10 becomes greater than voltage Vo of smoothing capacitor 7.

In a period of time Δt when switch 9 is turned on, signal generating means 13 generates an OFF signal of switch 9, and switch driving means 14 turns off switch 9. Then capacitor 10 holds then voltage Vc2, and the current flows, as shown in Fig. 6, from ac power supply 1 and passes through reactor 8, diode 2, smoothing capacitor 7, diode 5 in this order, and becomes zero in due course due to lowering of ac input voltage Vi.

Bilateral switch 9 is turned off just after a zero-cross of a negative half cycle of ac input voltage Vi, and dc output voltage Vo is higher than ac input voltage Vi. Thus diodes 3 and 4 are reverse-biased, which blocks the input current.

In a period of time Δ d from the zero-cross of ac input voltage Vi (positive → negative), bilateral switch driving signal generating means 13 generates an ON signal of bilateral switch 9, and switch 9 is turned on by bilateral switch driving means 14. Then the current flows as arrow marks shown in Fig. 7.

In other words, the current flows from ac power supply 1 and passes through capacitor 10, diode 3, reactor 8, so that capacitor 10 is charged. In a period of time Δt when switch 9 is turned on, bilateral switch driving signal generating means 13 generates an OFF signal of bilateral switch 9, and switch 9 is turned off by bilateral switch driving means 14. Then capacitor 10 is charged up to voltage Vc1 and holds Vc1 and the current flows, as shown in Fig. 8, from ac power supply 1 and passes through diode 4, smoothing capacitor 7, diode 3, reactor 8 in this order, and becomes zero in due course due to lowering of ac input voltage Vi.

Charging and discharging capacitor 10 as discussed above allows the input current flows from a point nearer to the zero-cross point of the input voltage than the conventional power supply device, so that a higher power factor is obtainable.

Increment of Δt increases an amount of magnetic energy stored in reactor 8 as well as a charging amount in capacitor 10, so that dc output voltage Vo can be increased. Decrement of Δt lowers output voltage Vo. As such, varying Δt can vary dc output voltage Vo. A variable range of Δt is to be limited not longer than conductive length "Δto" of the bilateral switch, which produces a dc output voltage needed when the maximum load is applied.

The power supply device of the present invention can do a boosting operation. In other words, as shown in Fig. 7, during conductive time period Δt of bilateral switch 9 during the negative half cycle of ac input voltage Vi, reactor 8 and capacitor 10 store energy, and discharge the energy to smoothing capacitor 7 during the positive half cycle. DC output voltage Vo increases as time period Δt increases as shown in Fig. 12, and an increment of Vo depends on a load, namely, less load causes voltage Vo to rise higher with respect to the same time period of Δt. Therefore, extensive time period Δt at low load causes dc output voltage Vo to rise extraordinary high and possibly exceed the withstanding voltage of smoothing capacitor 7.

In order to avoid the foregoing problem, the maximum value of At is limited to, as discussed before, not longer than conductive length "Δ to" of the bilateral switch, which produces a dc output voltage needed when the maximum load is applied. This limitation allows the conductive length of switch 9 to be not longer than "Δto" even at a low load application, so that an extraordinary rise of dc output voltage Vo can be prevented.

Although heavy load is applied and Δt becomes longer, voltage Vo rises extraordinarily if the load abruptly and sharply lowers. In such a case, if an output supplied from dc output voltage detecting means 15 exceeds level OV1 set in over-voltage protecting means 17, switch 9 should be turned off until the output becomes lower than an output voltage over-rising protection releasing level which is set at lower level than the foregoing OV1. Switch 9 can be turned off by providing switch driving means 14 with an off-signal. Thus the voltage is prevented from rising, thereby preventing smoothing capacitor 7 from being destroyed.

Further, since the current becomes a series resonant current produced by reactor 8 and capacitor 10 or smoothing capacitor 7, a sharp increment of the current can be more effectively suppressed than a reactor short-circuit generally used in a boosting circuit. As a result, beat of reactor 8 can be suppressed.

Since the current is a series resonant current produced by reactor 8 and capacitor 10 or smoothing capacitor 7, it does not include ringing component of high-frequency. Therefore, a proper selection of inductance L of reactor 8, capacitance C' of capacitor 10, Δd, and Δt will adequately suppress the harmonics.

Fig. 11 shows a comparison of the harmonics component of the input current with the domestic regulatory guideline of the harmonics. The X-axis shows an order (e.g. third or fourth order) of the harmonics and the Y-axis shows a current value.

The foregoing discussion refers to the operation of the power supply device shown in Fig. 1; however, the power supply devices shown in Fig. 2 - Fig. 4 operate in a similar way.

### Exemplary Embodiment 2

An operation of a power supply device in accordance with the second exemplary embodiment is demonstrated hereinafter with reference to Fig. 13.

When a heavy load is applied and Δt is long, a dc output voltage rises extraordinarily due to a sudden and sharp increase of load 11. In this case, first over-voltage protecting means 17 (not shown) tries to turn off switch 9; however, if switch 9 could not be turned off because of its abnormality, the dc output voltage further rises. At this time, an output from dc output voltage detecting means 15 exceeds level OV2 (OV2 > OV1) set in a second over-voltage protecting means, then a contact of relay 16 coupled to switch 9 in series is turned off, thereby stopping the dc output voltage from rising. As a result, smoothing capacitor 7 is prevented from being destroyed.

### Exemplary Embodiment 3

Fig. 14 shows a power supply device in accordance with the third exemplary embodiment. Fig. 15 shows a relation between ON period Δt of a driving signal of bilateral switch 9 and a peak current value passing through switch 9. Fig. 16 shows a timing chart of ON signal period limiting means 20.

As shown in Fig. 15, a longer ON period Δt of the driving signal increases a peak value of the current passing through switch 9. However, the maximum length of ON period (Δt max) of the driving signal should be set such that the peak value of the current is not greater than the maximum rated current Ip max of switch 9.

When a time period of ON output signal, i.e., an ON signal of switch 9, supplied from bilateral-switch driving signal generating means 13 exceeds the given Δt max due to external disturbance or variations, as shown in Fig. 16, switch 9 is turned off and prevented from being destroyed. Switch 9 can be turned off by ON signal period limiting means 20 that provides switch driving means 14 with OFF signal of switch 9. The OFF signals are kept being supplied to driving means 14 until switch driving signal generating means 13 outputs an OFF signal, thereby protecting switch 9 from destruction, and at the same time, controlling switch 9 with an adequate conductive time period. As a result, the output voltage can be controlled.

### Exemplary Embodiment 4

Fig. 17 shows a power supply device in accordance with the fourth exemplary embodiment, and Fig. 18 shows a timing chart of over-current detecting means.

When a peak value of the current passing through bilateral switch 9 increases extraordinarily before ON-signal period limiting means 20 is activated by variations of the components or fluctuations of the power supply voltage, switch 9 should be turned off. Switch 9 can be turned off by detecting the current passing through switch 9 with over-current detecting means 21, and switch 9 is turned off before the current reaches the maximum rated current Ip max. Switch 9 is kept being turned off around until the next zero-cross point of the ac power supply comes, so that switch 9 is prevented from being destroyed. At the same time, switch 9 can be controlled again with a proper phase and a conductive time period, and its output voltage can be also controlled during the next half cycle of the ac power supply.

### Exemplary Embodiment 5

When bilateral switch 9 is erroneously turned on by a zero-cross signal supplied mistakenly due to an instantaneous power failure, and an over-current passes through switch 9, thereby destroying switch 9. This fifth embodiment avoids such an inconvenience.

Fig. 19 shows a block diagram in accordance with the fifth embodiment, and Fig. 20 shows a timing chart of zero-cross signal masking means 22. As shown in Fig. 20, within a certain time period between after a normal zero-point signal of zero-cross detecting means 12 has been output at a zero-point of ac power supply 1 and before the next half cycle of ac power supply1 starts, the output from zero-cross detecting means 12 is cut off by zero-cross signal masking means 22. This structure prevents an erroneous zero-point signal supplied from detecting means 12 from being delivered to switch driving signal generating means 13. As a result, switch 9 is not turned on mistakenly, and is protected from destruction.

As discussed above, according to the power supply device of the present invention, when a dc output voltage exceeds a given value, a bilateral switch is turned off for preventing the switch and a smoothing capacitor from being destroyed. At the same time, the switch is activated conductive with an appropriate phase and a proper conductive time period, so that harmonics of an input current can be suppressed and also a higher power factor of the input current is obtainable. This power supply device also can produce a controllable dc output voltage higher than a peak voltage of the ac power supply.

An excess of the dc output voltage over a predetermined value prompts a contact of relay, coupled to the switch and a capacitor in series, to be turned off, thereby preventing the switch and the smoothing capacitor from being destroyed. At the same time, the switch is activated conductive with an appropriate phase and a proper conductive time period, so that harmonics of an input current can be suppressed and also a higher power factor of the input current is obtainable. This power supply device also can produce a controllable dc output voltage higher than a peak voltage of the ac power supply.

The bilateral switch is turned off only a time period during which an ON period of a driving signal of the switch exceeds a given time, thereby preventing the switch from being destroyed. At the same time, the switch is activated conductive with an appropriate phase and a proper conductive time period, so that harmonics of an input current can be suppressed and also a higher power factor of the input current is obtainable. This power supply device also can produce a controllable dc output voltage higher than a peak voltage of the ac power supply.

The bilateral switch is turned off when the current passing through the switch exceeds a given value, thereby preventing the switch from being destroyed. At the same time, the switch is activated conductive with an appropriate phase and a proper conductive time period, so that harmonics of an input current can be suppressed and also a higher power factor of the input current is obtainable. This power supply device also can produce a controllable dc output voltage higher than a peak voltage of the ac power supply.

Even if an external disturbance such as an instantaneous power failure occurs, the bilateral switch is turned on with an appropriate phase, thereby preventing the switch from being destroyed. At the same time, the switch is activated conductive with a proper conductive time period, so that harmonics of an input current can be suppressed and also a higher power factor of the input current is obtainable. This power supply device also can produce a controllable dc output voltage higher than a peak voltage of the ac power supply.

### Industrial Applicability

The power supply device adopts a rectifying method that uses a bridge rectifying circuit, and powers an apparatus or a system. This power supply device can obtain a higher power factor and suppress harmonics, in addition to protecting itself from an over-voltage and an over-current.

## Claims

1. A power supply device including an ac power supply (1); a bridge rectifying circuit (6) for fullwave-rectifying an ac supplied from the ac power supply (1); a smoothing capacitor (7) coupled to dc output terminals of the bridge rectifying circuit (6), the power supply device comprising:
reactor (8) coupled between the ac power supply (1) and an ac input terminal of the bridge rectifying circuit (6);
a capacitor (10) coupled via a bilateral switch (9) between another ac input terminal and a dc output terminal of the bridge rectifying circuit (6);
zero-cross detecting means (12) for detecting a zero point of a voltage of the ac power supply (1);
bilateral-switch driving signal generating means (13) for generating a driving signal of the bilateral switch (9) based on an output from the zero-cross detecting means (12);
bilateral-switch driving means (14) for driving the bilateral switch (9) based on a signal generated by bilateral-switch driving signal generating means (13);
dc output voltage detecting means (15) for detecting a dc output voltage applied across the smoothing capacitor (7) ; and
first over-voltage protecting means (17) for turning off the bilateral switch (9) until the dc output voltage becomes lower than an over-voltage protection releasing level that is set at a lower level than over-voltage protecting level OV1 when the dc output voltage exceeds the level OV1.

2. The power supply device of claim 1 further comprising:
a relay contact (16) coupled to the bilateral switch (9) and the capacitor (10) in series; and
second over-voltage protecting means (18) for turning off the relay contact (16) when the dc output voltage exceeds an over-voltage protecting level OV2 (OV2 > OV1).

3. The power supply device of claim 1 further comprising:
ON signal period detecting means for detecting an ON period of the driving signal supplied from signal generating means (13); and
ON signal period limiting means (20) for keeping switch (9) turned off until the driving signal is turned off when the ON period of the driving signal exceeds a predetermined time Δt max.

4. The power supply device of claim 1 further comprising:
over-current protecting means (21) for detecting a current passing through the bilateral switch (9), and keeping the switch (9) turned off until a next half cycle of the ac power supply (1) starts when the current exceeds a given value of Ip max.

5. The power supply device of claim 1 further comprising:
zero-cross signal masking means (22) for preventing an output supplied from the zero-cross detecting means (12) from being delivered to the switch driving signal generating means (13) for a certain time period between after an output of the zero-cross detecting means (12) has been delivered to signal generating means (13) and before a next half cycle of the ac power supply (1) starts.
